(19) Europäisches Patentamt
European Patent Office
Office européen des brevets

(11) EP 2 543 509 B1

(12) **EUROPEAN PATENT SPECIFICATION**

(45) Date of publication and mention of the grant of the patent:
**02.05.2018 Bulletin 2018/18**

(21) Application number: **11750702.0**

(22) Date of filing: **02.03.2011**

(51) Int Cl.:
***B32B 15/09*** (2006.01) ***B32B 15/08*** (2006.01)
***C08G 64/02*** (2006.01) ***B32B 27/36*** (2006.01)
***B32B 27/30*** (2006.01)

(86) International application number:
**PCT/JP2011/054775**

(87) International publication number:
**WO 2011/108593 (09.09.2011 Gazette 2011/36)**

(54) **COATING RESIN-SHEET- METAL LAMINATE AND PROCESS FOR PRODUCING THE SAME**

LAMINAT EINER HARZFOLIENBESCHICHTUNG UND EINES METALLS UND HERSTELLUNGSVERFAHREN DAFÜR

STRATIFIÉ DE METAL-FEUILLE DE RÉSINE DE REVETEMENT ET PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2010 JP 2010046628**

(43) Date of publication of application:
**09.01.2013 Bulletin 2013/02**

(73) Proprietor: **Mitsubishi Chemical Corporation**
**Tokyo 100-8251 (JP)**

(72) Inventors:
- **YOKOGI, Masashi**
**Kitakyushu-shi,**
**Fukuoka, 806-0004 (JP)**
- **KITADE, Taku**
**Shiga 526-8660 (JP)**
- **EBITANI, Toshiaki**
**Shiga 526-8660 (JP)**

(74) Representative: **Vossius & Partner**
**Patentanwälte Rechtsanwälte mbB**
**Siebertstrasse 3**
**81675 München (DE)**

(56) References cited:
**JP-A- 2008 188 970**
**JP-A- 2009 079 190**
**JP-A- 2009 144 019**
**JP-A- 2009 161 746**
**US-A1- 2009 105 393**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

Technical Field

The present invention relates to a coating resin sheet-metal laminate that is suitable for use in applications such as the housings of electrical/electronic appliances or cell phones, panel materials for furniture made of plywood or for furniture made of steel, panel materials for the walls or ceiling of a unit bath, building materials for indoor doors or partitions, and members for front doors and peripheral vertical plate members, which are relatively required to have weatherability, and that has excellent suitability for embossing for enhancing design attractiveness. The invention further relates to a process for producing the laminate.

Background Art

For those applications, use has conventionally been made of laminates obtained by coating a synthetic resin molded article, plywood, wood fiberboard, metal sheet, and the like with a flexible vinyl chloride resin sheet (hereinafter referred to as "flexible PVC sheet") to which an embossed design has been imparted. Use has also been made of coated metal sheets and the like.

With respect to laminates having a printed design, use has been made of a configuration obtained by coating the printed layer of a flexible PVC sheet with a transparent acrylic film to which an ultraviolet absorber has been added.

Flexible PVC sheets have various excellent features. In recent years, however, use of the vinyl chloride resins has come to be restricted because of the problem concerning heavy-metal compounds attributable to some stabilizers for vinyl chloride resins, the VOC problem and the problem of endocrine disturbance which are attributable to some plasticizers or stabilizers, the problem that the resins generate hydrogen chloride gas and other chlorine-containing gases upon combustion, etc.

Under these circumstances, coating resin sheet-metal laminates employing a polyester resin as a resin sheet for substituting for the flexible PVC sheet and having a high surface hardness, coating resin sheet-metal laminates employing a polyolefin resin as a substitute for the flexible PVC sheet and capable of accommodating a variety of colors and designs, and other laminates came onto the market.

Furthermore, investigations were made in order to develop a resin sheet including an aromatic polycarbonate resin as the main component and having excellent weatherability and suitability for embossing.

Patent document 1 discloses a product that includes an aromatic polycarbonate resin into which a specific ultraviolet absorber has been incorporated to improve the weatherability thereof.
Patent document 2 discloses a product which includes a transparent aromatic polycarbonate resin layer and a resin layer that underlies the polycarbonate resin layer and is made of a transparent resin containing specific glittering particles, and to which a glittering design has been thereby imparted.
Patent document 3 discloses a product to which improved suitability for embossing has been imparted by blending an aromatic polycarbonate resin with a polyester resin and thereby heightening the tensile modulus.
Patent Document 4: JP 2009-144019
Patent Document 5: US 2009/105393
Patent Document 6: JP 2009-079190

Prior-Art Documents

Patent Documents

Patent Document 1: JP-A-2007-1022
Patent Document 2: JP-A-2007-326314
Patent Document 3: JP-A-2008-188970
Patent Document 4 relates to a molded article with a metal-inorganic thin film comprising a polycarbonate including a constitutional unit derived from a dihydroxy compound represented by general formula (1):

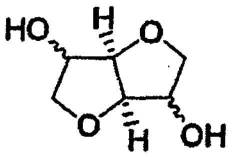

(1).

Patent Document 5 relates to a polycarbonate polymer comprising an isosorbide unit, an aliphatic unit derived from a $C_{14-44}$ aliphatic diacid, $C_{14-44}$ aliphatic diol, or combination of these; and
optionally, an additional unit different from the isosorbide and aliphatic units, wherein the isosorbide unit, aliphatic unit, and additional unit are each carbonate, or a combination of carbonate and ester units.
Patent Document 6 relates to a surface protective film or sheet which is formed of a polycarbonate resin containing a carbonate structural unit [A] expressed by formula (1) or a blend thereof, where the carbonate structural unit [A] occupies a 50-100 mol% ratio among total carbonate structural units:

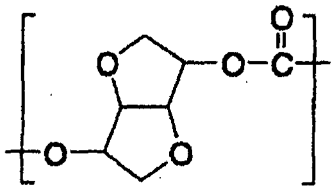

(1)

Summary of the Invention

Problems that the Invention is to Solve

However, the technique disclosed in patent document 1 is not considered to be sufficient in the case where the resin is used after having been colored in a light tint, such as white, or where the product is used for an exceedingly long period in applications where a change in color tone is rarely permitted, although the product can be highly satisfactorily used when the resin has been colored in a dark tint, e.g., black, or when the product is used in applications where a slight change in color tone is permitted.
According to the technique disclosed in patent document 2, a deep glittering design is obtained by forming a layer containing glittering particles dispersed therein as a layer underlying a transparent surface layer. However, in this technique also, in the case where the underlying layer has a light color, gradual progress of yellowing is visually recognized as a change which occurs over a long period. A further improvement hence is desired.
According to the technique disclosed in patent document 3, suitability for embossing can be improved by improving the resin composition of a sheet, and the product has become suitable also for use in applications where embossed-design heat resistance is required, in particular, unit baths and the like. However, the resin sheets for use in such applications generally have been colored in a light tint in many cases, and there is a need for higher weatherability.
Hitherto, those techniques have sufficed for such requirements for those applications. However, as a result of the prolonged lives and more attractive designs of products and because of an increase in the range of applications, etc., even higher weatherability has come to be desired besides the performances which have been attained so far.
In general, aromatic polycarbonate resins, when exposed to solar radiation or white light, undergo light absorption in a near-ultraviolet to visible-light wavelength region. As a result, the molecular structures thereof are destroyed and yellowing deterioration proceeds gradually. In order to inhibit the yellowing deterioration, ultraviolet absorbers are added to aromatic polycarbonate resins using various knowledge.
However, since the ultraviolet absorbers themselves gradually deteriorate as a result of light absorption, the effect thereof does not last over long. For overcoming the further problem described above, it is necessary to thoroughly investigate layer structures, resin compositions, etc. to find out a drastic solution to the problem.
Accordingly, an object of the invention is to provide a laminate (coating resin sheet-metal laminate) obtained by coating a metal with a resin sheet that has been improved in weatherability, a drastic improvement of which has been difficult in resin sheets in which an aromatic polycarbonate resin is contained as a main component, and that satisfies various performances required of the product, such as, for example, suitability for embossing.

Means for Solving the Problems

The present inventors diligently made investigations. As a result, the inventors have found that by laminating

a resin layer constituted of a specific polycarbonate resin to a metal layer, an excellent balance among weatherability, embossing pattern receptibility, embossed-design heat resistance, processability, and surface hardness is attained. The invention has been thus completed.

The invention will be explained below. Although there are cases where reference numerals in the accompanying drawings are appended in the description for the purpose of easy understanding of the invention, this is not construed as limiting the invention to the embodiments shown by the drawings.

In the invention, the term "contained as a main component" means that the proportion of the ingredient in the portion is 50% by weight or more, preferably 75% by weight or more.

The term "sheet" in the invention includes both the range of thicknesses for which "film" is generally used and the range of thicknesses for which "sheet" is generally used. These two kinds of materials are inclusively called "sheet" in the invention for convenience.

Furthermore, a layer "having transparency to visible light" in the invention means that the other layer or metal layer (50) which is present behind that layer can be seen therethrough.

The present invention can be summarized in the following items 1 to 19:

1. A coating resin sheet-metal laminate characterized by comprising a metal sheet and, formed thereover, an embossed resin layer (layer A) comprising a polycarbonate resin which contains 50% by mole or higher as a content of a structural unit derived from a dihydroxy compound having, as part of the structure thereof, a site represented by the following formula (1)

[Chem. 1]

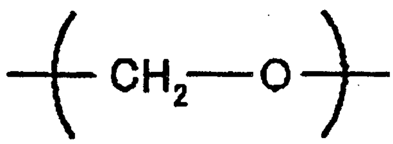

(1)

(The case where the site represented by the above formula (1) is part of $-CH_2-O-H$ is omitted.), wherein the dihydroxy compound is a dihydroxy compound represented by the following formula (2)

[Chem. 2]

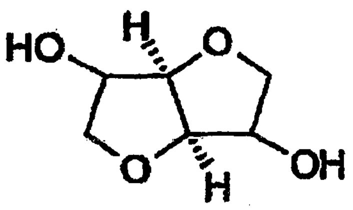

(2).

2. The coating resin sheet-metal laminate according to item 1, wherein the glass transition temperature of the polycarbonate resin as measured by differential scanning calorimetry (DSC) is 100 to 155°C.

3. The coating resin sheet-metal laminate as claimed in item 1 or 2, wherein the polycarbonate resin contains structural units derived from an aliphatic dihydroxy compound and structural units derived from an alicyclic dihydroxy compound.

4. The coating resin sheet-metal laminate as claimed in any one of items 1 to 3, wherein the polycarbonate resin contains 0.0001 to 1 part by weight of an ultraviolet absorber per 100 parts by weight of the polycarbonate resin.

5. The coating resin sheet-metal laminate as claimed in item 4, wherein the ultraviolet absorbers has a melting point in the range of 120 to 250°C.

6. The coating resin sheet-metal laminate as claimed in any one of items 1 to 5, which comprises a colored layer (layer B) disposed between the layer A and the metal sheet.

7. The coating resin sheet-metal laminate as claimed in item 6, wherein the layer B has a tensile elongation at break at 23°C of 100-350%.

8. The coating resin sheet-metal laminate as claimed in item 6 or 7, wherein the layer B comprises a thermoplastic resin which comprises, as a main component thereof, an acrylic resin containing a crosslinked rubber elastomer ingredient.

9. The coating resin sheet-metal laminate as claimed in item 8, wherein the crosslinked rubber elastomer ingredient is a core-shell type copolymer composition obtained by forming a (meth)acrylic ester resin by graft polymerization using an acrylic resin-based crosslinked rubber elastomer ingredient as cores.

10. The coating resin sheet-metal laminate as claimed in any one of items 1 to 9, which comprises a visible-light-transmitting layer (layer C) disposed between the layer A and the metal sheet.

11. The coating resin sheet-metal laminate as claimed in item 10, wherein the layer C comprises a thermoplastic resin having transparency to visible light and platy glittering particles, the amount of the platy glittering particles being 0.5-5.0% by weight per 100% by weight the thermoplastic resin having transparency to visible light.

12. The coating resin sheet-metal laminate as claimed in any one of items 1 to 11, which comprises a printed layer (layer D) disposed between the layer A and the metal sheet.

13. A process for producing a multilayer structure coating resin sheet-metal laminate according to any one of items 1 to 12, which comprises laminating either a resin sheet including the layer A or a resin sheet including the layer A and at least one layer selected from the group consisting of the layer B, the layer C, the layer D, and the layer E to the metal sheet.

14. A front door comprising the coating resin sheet-metal laminate according to any one of items 1 to 12.

15. A building material comprising the coating resin sheet-metal laminate according to any one of items 1 to 12.

16. A unit bath member comprising the coating resin sheet-metal laminate according to any one of items 1 to 12.

17. A steel furniture member comprising the coating resin sheet-metal laminate according to any one of items 1 to 12.

18. A housing for electrical/electronic appliances comprising the coating resin sheet-metal laminate according to any one of items 1 to 12.

19. An automotive interior material comprising the coating resin sheet-metal laminate according to any one of items 1 to 12.

Effects of the Invention

The coating resin sheet-metal laminate of the invention has greatly improved weatherability regarding yellowing deterioration as compared with conventionally known resin sheets containing an aromatic polycarbonate resin as a main component. The laminate hence is suitable also for applications in which weatherability is relatively required over a long period, such as, for example, front doors or peripheral vertical plate members.

Furthermore, the layer A which constitutes a surface layer of the coating resin sheet-metal laminate of the invention is easily embossed to thereby impart a design thereto, and the layer B can be colored in various tints of various patterns, making it possible to accommodate small-quantity production of many kinds of products. Other layers such as a visible-light-transmitting layer (layer C) and a printed layer (layer D), which are capable of imparting a glittering design, may be disposed between the layer A and the metal layer. It is thus possible to accommodate enhancement of various design attractiveness.

A preferred embodiment of the coating resin sheet-metal laminate of the invention has an outer layer having transparency to visible light that has been disposed on that surface of the layer A which is opposite to the metal layer side thereof. Thus, it is possible to improve the surface hardness and, in particular, to protect the layer A to which an embossed design has been imparted. As a result, design attractiveness can be further heightened.

Such effects and advantages of the invention will be apparent from the following best modes for carrying out the invention.

Brief Description of the Drawings

[Fig. 1] Fig. 1(a) to (e) are diagrammatic sectional views illustrating various embodiments of the coating resin sheet-metal laminate of the invention.

[Fig. 2] Fig. 2 is a diagrammatic side view of an embossing machine.

[Fig. 3] Fig. 3 is a schematic view of an embossed pattern imparted in the Examples. Modes for Carrying Out the Invention

The invention will be explained below on the basis of the embodiments shown in the drawings.

Fig. 1 (a) is a sectional view which schematically illustrates an embodiment (110) that has the basic configuration of the coating resin sheet-metal laminate of the invention. This embodiment is obtained by laminating layer A (10)/metal sheet (50).

Fig. 1 (b) is a sectional view which schematically illustrates an embodiment (120) in which a colored design has been imparted to the basic configuration. This embodiment is obtained by laminating layer A (10)/layer B (20)/metal layer (50).

Fig. 1 (c) is a sectional view which schematically illustrates an embodiment (130) in which a colored design and a glittering design have been imparted to the basic configuration. This embodiment is obtained by laminating layer A (10)/layer C (30)/layer B (20)/metal layer (50).

Fig. 1 (d) is a sectional view which schematically illustrates an embodiment (140) in which a colored design and a printed design have been imparted to the basic configuration. This embodiment is obtained by laminating layer A (10)/layer D (40)/layer B (20)/metal layer (50).

Fig. 1 (e) is a sectional view which schematically illustrates an embodiment (150) in which a colored design has been imparted to the basic configuration and an embossed design has been imparted to the surface of the layer A (10). This embodiment is obtained by laminating layer A (10)/layer B (20)/metal layer (50).

Fig. 1 (a) to (e) merely show representative embodiments, and two or more of those designs may be imparted in combination. Other layers may be disposed and laminated so long as this does not defeat the objects of the invention.

Fig. 2 shows an embossing machine (200) for use in imparting an embossed design to a flexible PVC sheet. A layer A (10) only is fed to the surface of a heating roll 1, or a layer A (10) and a layer B (20) are superposed in the order of layer A (10)/layer B (20), wound on the heating roll 1, and laminated with heating. The layer A (10) or the laminated sheet 7 passes by a takeoff roll 2, is subjected to a given treatment with an infrared heater 3, and is sent to a nip roll 4, an embossing roll 5, and a cooling roll 6.

The laminating integration of the layer A to the layer B (and other interlayers according to need) in producing a coating resin sheet-metal laminate of the invention can be conducted by means of thermal fusion laminating when the layers pass by the heating roll 1 within the embossing machine (200). Although it is possible to conduct laminating integration in a separate step in advance, use of this method results in complicated steps or necessitates an additional material, e.g., an adhesive. It is therefore preferred to select that method described above.

In the case where a layer C or another interlayer is disposed, the layer C or interlayer may be subjected to laminating integration to the layer A or layer B in advance, or the plurality of webs may be directly fed to the embossing machine. Alternatively, the layer A or layer B to which a printed design has been imparted may be fed.

<Polycarbonate Resin Layer (Layer A)>

The layer A (10) constitutes a surface layer of the coating resin sheet-metal laminate of the invention, and is a layer to which an embossed design is imparted with an embossing machine (200).

The layer A (10) in the coating resin sheet-metal laminate of the invention includes a polycarbonate resin. The polycarbonate resin to be used in the layer A (10) may be a polycarbonate resin which contains a structural unit derived from a dihydroxy compound having, as part of the structure thereof, a site represented by the following formula (1). In typical embodiments, this polycarbonate resin has transparency to visible light.

[Chem. 3]

$$-\left(CH_2-O\right)- \quad (1)$$

However, the case where the site represented by formula (1) is part of $-CH_2-O-H$ is omitted. Namely, the dihydroxy compound is a compound which at least contains two hydroxyl groups and the site of formula (1).

The dihydroxy compound having, as part of the structure thereof, a site represented by formula (1) is required to be represented by formula (2). These are anhydrous sugar alcohols which are usually compounds having a plurality of hydroxy groups and being obtained by the dehydrating cyclization of saccharides or derivatives thereof. The dihydroxy compound is a compound which has in the molecule thereof an oxygen atom as a heteroatom, the oxygen atom being not part of a hydroxyl group.

Disclosed examples of the dihydroxy compound include the following compounds having an ether structure: compounds which have an aromatic group as a side chain and have, in the main chain, ether groups each bonded to an aromatic group, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene and 9,9-bis(4-(3-hydroxy-2,2-dimethylpropoxy)phenyl)fluorene, and dihydroxy compounds having a cyclic ether structure which are represented by spiro glycols represented by the following formula (3).

The dihydroxy compounds having a cyclic ether structure are compounds which have both a structure portion having a cyclic ether structure and two hydroxy groups.

In both the anhydrous sugar alcohols and the dihydroxy compounds having a cyclic ether structure, the hydroxy groups each may have been directly bonded to a cyclic structure or may have been bonded to a cyclic structure through a substituent.

The cyclic structure may be a monocycle or a polycycle. However, the anhydrous sugar alcohols and the dihydroxy compounds having a cyclic ether structure in the molecule thereof preferably are compounds which each have a plurality of cyclic structures. More preferred are compounds having two cyclic structures. It is especially preferred that these two cyclic structures should be the same.

More specific examples of the dihydroxy compounds represented by the following formula (2) include isosorbide, isomannide, and isoidide, which are stereoisomers.

Examples of the disclosed dihydroxy compounds having a cyclic ether structure include dihydroxy compounds having a cyclic ether structure which are represented by the following formula (3). Examples of such dihydroxy compounds having a cyclic ether structure include 3,9-bis(1,1-dimethyl-2-hydroxyethyl)-2,4,8,10-tetraoxaspiro(5.5)undecane (common name; spiro glycol), 3,9-bis(1,1-diethyl-2-hydroxyethyl)-2,4,8,10-tetraoxaspiro(5.5)undecane, 3,9-bis(1,1-dipropyl-2-hydroxyethyl)-2,4,8,10-tetraoxaspiro(5.5)undecane, and the compound represented by formula (4).

These compounds may be used alone, or two or more thereof may be used in combination. However, in the present invention, the dihydroxy compound of formula (1) is a dihydroxy compound of formula (2).

[Chem. 4]

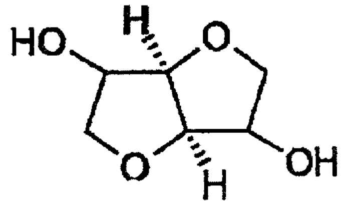

(2)

[Chem. 5]

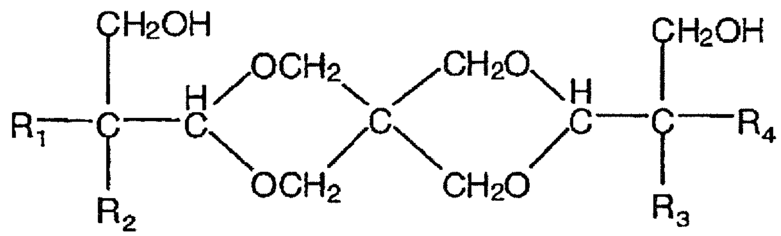

(3)

In formula (3), $R_1$ to $R_4$ each independently are an alkyl group having1-3 carbon atoms.

[Chem. 6]

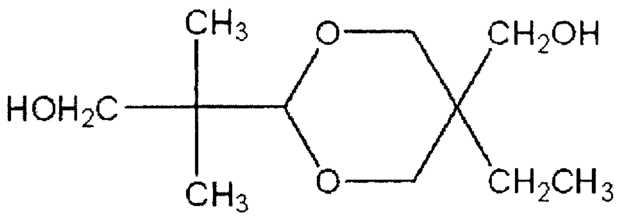

(4)

The dihydroxy compounds represented by formula (2) are ether diols which can be produced from glucides contained in biomass-derived starting materials. In particular, isosorbide can be produced at low cost by hydrogenating the D-glucose obtained from starch and then dehydrating the hydrogenation product, and this starting material is abundantly available. In view of these circumstances, isosorbide is most preferred.

The polycarbonate resin to be used as the layer A (10) may further contain structural units other than the structural unit derived from a dihydroxy compound having a site represented by formula (1). By using the polycarbonate resin which further contains structural units other than the structural unit derived from a dihydroxy compound having a site represented by formula (1), processability and impact resistance can be improved.

Preferred of the structural units other than the structural unit derived from a dihydroxy compound having a site represented by formula (1) are structural units derived from a dihydroxy compound having no aromatic ring.

More specific examples thereof include the structural units derived from aliphatic dihydroxy compounds which are described in International Publication No. 2004/111106 and the structural units derived from alicyclic dihydroxy compounds which are described in International Publication No. 2007/148604.

It is preferred that the polycarbonate resin should contain structural units derived from at least one dihydroxy compound selected from ethylene glycol, 1,3-propanediol, 1,4-butanediol, 1,5-pentanediol, and 1,6-hexanediol, among the structure units derived from aliphatic dihydroxy compounds.

Preferred of the structural units derived from alicyclic dihydroxy compounds are structural units which contain a 5-membered cyclic structure or 6-membered cyclic structure. The 6-membered cyclic structure may be in a chair form or boat form which has been fixed by means of covalent bonding.

The incorporation of such structural units derived from an alicyclic dihydroxy compound of a 5-membered cyclic structure or 6-membered cyclic structure enables the resultant polycarbonate to have enhanced heat resistance.

The number of the carbon atoms contained in the alicyclic dihydroxy compound is usually preferably 70 or less, more preferably 50 or less, even more preferably 30 or less.

Examples of the alicyclic dihydroxy compound including a 5-membered cyclic structure or 6-membered cyclic structure include the alicyclic dihydroxy compounds given in International Publication No. 2007/148604, which was cited above.

Preferred examples among those include cyclohexanedimethanol, tricyclodecanedimethanol, adamantanediol, and pentacyclopentadecanedimethanol. Of these, cyclohexanedimethanol or tricyclodecanedimethanol is most preferred from the standpoints of profitability, heat resistance, etc. These compounds may be used alone or in combination of two or more thereof.

Preferred of the cyclohexanedimethanols is 1,4-cyclohexanedimethanol, which is industrially available with easy.

The content of the structural unit derived from a dihydroxy compound having, as part of the structure thereof, a site represented by formula (1) in the polycarbonate resin is 50% by mole or higher, and is preferably 90% by mole

or less, more preferably 80% by mole or less.

By regulating the content thereof so as to be within that range, the polycarbonate resin can be inhibited from suffering the coloring attributable to carbonate structures, the coloring attributable to impurities contained in a slight amount because of the use of a biomass-derived starting material, etc. There hence is a possibility that the transparency which is usually required of the layer A (10) might not be impaired. Furthermore, it is possible to obtain an adequate balance among moldability, mechanical strength, heat resistance, etc., which is difficult to attain with, for example, a polycarbonate resin constituted only of structural units derived from a dihydroxy compound having, as part of the structure thereof, a site represented by formula (1).

Although it is preferred that the polycarbonate resin should be constituted of structural units derived from a dihydroxy compound having, as part of the structure thereof, a site represented by formula (1) and of structural units derived from an aliphatic dihydroxy compound and/or structural units derived from an alicyclic dihydroxy compound in accordance with claim 1, the polycarbonate resin may further contain structural units derived from other dihydroxy compounds, so long as this does not defeat the objects of the invention.

The glass transition temperature of the polycarbonate resin is measured by differential scanning calorimetry (DSC). The glass transition temperature of the polycarbonate resin is usually preferably 45-155°C, more preferably 80-155°C, even more preferably 100-155°C. It is usually preferred that the polycarbonate resin should have a single glass transition temperature.

The glass transition temperature thereof can be regulated by suitably selecting the kinds and contents of the structural units derived from a dihydroxy compound having, as part of the structure thereof, a site represented by formula (1) and the structural units derived from an aliphatic dihydroxy compound and/or an alicyclic dihydroxy compound.

By regulating the glass transition temperature of the polycarbonate resin so as to be within that range, the following effects are obtained. Since the polycarbonate resin remarkably changes in elastic modulus when heated or cooled beyond the glass transition temperature, it is easy to impart an embossed design by embossing the resin sheet in a thermally softened state and to fix the embossed pattern by cooling the sheet. Namely, satisfactory pattern receptibility is obtained. Furthermore, this polycarbonate resin sheet further has satisfactory heat resistance, and it is possible to obtain an embossed design which does not disappear even when the sheet is immersed in boiling water.

Configurations in which a conventional acrylic resin constitutes an outermost layer have the following and other problems. Since the conventional acrylic resin has a glass transition temperature of about 100°C, the layer is apt to have insufficient embossed-design heat resistance. Furthermore, since the conventional acrylic resin has high rubber elasticity, it is difficult to transfer a satisfactory embossed design with a conventional embossing machine which has been used for embossing flexible PVC sheets. In contrast, such conventional embossing machines can be diverted to the impartation of an embossed design to the layer A (10) according to the invention. In this respect also, the regulation of glass transition temperature is preferred.

The polycarbonate resin can be produced by polymerization techniques in general use, and either a phosgene method or a transesterification method which involves reaction with a carbonic diester may be used. Preferred of these is a transesterification method in which a dihydroxy compound having, as part of the structure thereof, a site represented by formula (1), an aliphatic and/or alicyclic dihydroxy compound, one or more other dihydroxy compounds which are used according to need, and a carbonic diester are reacted in the presence of a polymerization catalyst.

The transesterification method is a production method in which a dihydroxy compound having, as part of the structure thereof, a site represented by formula (1), an aliphatic and/or alicyclic dihydroxy compound, one or more other dihydroxy compounds which are used according to need, and a carbonic diester are subjected to a transesterification reaction in the presence of a basic catalyst and an acidic substance for neutralizing the basic catalyst.

Representative examples of the carbonic diester include diphenyl carbonate, ditolyl carbonate, bis(chlorophenyl) carbonate, di-m-cresyl carbonate, dinaphthyl carbonate, bis(biphenyl) carbonate, diethyl carbonate, dimethyl carbonate, dibutyl carbonate, and dicyclohexyl carbonate. It is especially preferred to use diphenyl carbonate among these.

The molecular weight of the thus-obtained polycarbonate resin to be used in the invention can be expressed in terms of reduced viscosity. The lower limit of the reduced viscosity thereof is preferably 0.20 dL/g or higher, more preferably 0.30 dL/g or higher, even more preferably 0.35 dL/g or higher, and the upper limit of the reduced viscosity thereof is preferably 1.20 dL/g or less, more preferably 1.00 dL/g or less, even more preferably 0.80 dL/g or less.

In the case where the reduced viscosity of the polycarbonate resin is too low, there is a possibility that this resin might give molded articles having low mechanical strength. In the case where the reduced viscosity thereof is too high, there is a tendency that this resin shows reduced flowability during molding, resulting in decreases in productivity and moldability.

The reduced viscosity of a polycarbonate resin is determined in the following manner. A polycarbonate solution having a polycarbonate concentration precisely adjusted to 0.60 g/dL is prepared using methylene chloride as a solvent, and this solution is examined at a temperature of 20.0$\pm$0.1°C using automatic viscometer Type DT-504, manufactured by Chuo Rika Corp., which employs an Ubbelohde viscometer.

The relative viscosity $\eta_{rel}$ is determined from the flow-down time of the solvent $t_0$ and the flow-down time of the

solution t using the following equation.

$$\eta_{rel} = t/t_0$$

From the relative viscosity $\eta_{rel}$, the specific viscosity $\eta_{sp}$ is determined using the following equation.

$$\eta_{sp} = (\eta-\eta_0)/\eta_0 = \eta_{rel}-1$$

The specific viscosity $\eta_{sp}$ is divided by the concentration c (g/dL) to determine the reduced viscosity (converted viscosity) $\eta_{red}$ using the following equation.

$$\eta_{red} = \eta_{sp}/c$$

The layer A (10) in the coating resin sheet-metal laminate of the invention shows substantially no light absorption in a near-ultraviolet to visible-light wavelength region and has excellent weatherability with respect to yellowing deterioration due to exposure to light. There hence is no particular need of incorporating an ultraviolet absorber. However, in the case where the coating resin sheet-metal laminate includes a design-bearing interlayer which is apt to suffer yellowing deterioration or in the case, for example, where it is necessary to especially inhibit a change in color tone from occurring with the lapse of time, an ultraviolet absorber may be incorporated into the layer A (10) in a minimum necessary amount.
As the ultraviolet absorber to be added to the layer A (10), use can be made of known ultraviolet absorbers, e.g., various commercial ultraviolet absorbers, without particular limitations. Suitable of these are ultraviolet absorbers which are usually added to known aromatic polycarbonate resins.
Examples thereof include benzotriazole-based ultraviolet absorbers such as 2-(2'-hydroxy-5'-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis($\alpha$,$\alpha$-dimethylbenzyl)phenyl]-2H-benzotriazole, and 2,2'-methylenebis(4-cumyl-6-benzotriazolephenyl); benzoxazine-based ultraviolet absorbers such as 2,2'-p-phenylenebis(1,3-benzoxazin-4-one); and hydroxyphenyltriazine-based ultraviolet absorbers such as 2-(4,6-diphenyl-1,3,5-triazin-2-yl)-5-(hexyl)oxyphenol.
With respect to the melting points of ultraviolet absorbers, ultraviolet absorbers having a melting point in the range of 120-250°C are especially preferred. By using an ultraviolet absorber having a melting point of 120°C or higher, the molded object is prevented from suffering surface fouling due to the bleeding phenomenon in which the ultraviolet absorber migrates to the molding surface with the lapse of time, or in the case of molding with a die or metal rolls, these members are prevented from being fouled by bleeding. Namely, it becomes easy to reduce and mitigate the surface dulling of molded articles.
More specifically, it is preferred to use benzotriazole-based ultraviolet absorbers such as 2-(2'-hydroxy-5'-methylphenyl)benzotriazole, 2-(2'-hydroxy-3'-tert-butyl-5'-methylphenyl)-5-chlorobenzotriazole, 2-[2'-hydroxy-3'-(3",4",5",6"-tetrahydrophthalimidomethyl)-5'-methylphenyl]benzotriazole, 2,2-methylenebis[4-(1,1,3,3-tetramethylbutyl)-6-(2H-benzotriazol-2-yl)]phenol, and 2-(2-hydroxy-3,5-dicumylphenyl)benzotriazole and hydroxyphenyltriazine-based ultraviolet absorbers such as 2-(4,6-diphenyl-1,3,5-triazin-2-yl)-5-(hexyl)oxyphenol.
Especially preferred of these are 2-(2-hydroxy-3,5-dicumylphenyl)benzotriazole, 2,2-methylenebis[4-(1,1,3,3-tetramethylbutyl)-6-(2H-benzotriazol-2-yl)]phenol, and 2-(4,6-diphenyl-1,3,5-triazin-2-yl)-5-(hexyl)oxyphenol. One of these ultraviolet absorbers may be used alone, or two or more thereof may be used in combination.
With respect to the addition amount of an ultraviolet absorber, the amount of the ultraviolet absorber to be added per 100 parts by weight of the polycarbonate resin to be used in the invention is preferably 0.0001-1 part by weight, more preferably 0.0005-0.5 parts by weight, even more preferably 0.001-0.2 parts by weight.
By adding an ultraviolet absorber in an amount within that range, the weatherability of the coating resin sheet-metal laminate of the invention can be improved while preventing the ultraviolet absorber from bleeding and migrating to the surface of the layer A (10) and preventing the layer A (10) from decreasing in mechanical properties.
Examples of commercially available ultraviolet absorbers include "Tinuvin 1577FF", manufactured by BASF A.G.
Various additives may be added in suitable amounts to the layer A (10) as additive ingredients other than ultraviolet absorbers. For example, a transparent colorant such as a dye, a fluorescent agent, a bluing agent, or the like may be used to color the layer A (10) for the purpose of imparting design attractiveness. Furthermore, a particulate substance capable of producing a higher design effect, such as a hologram foil, glittering mica which has undergone a surface modification treatment, glittering glass flakes, etc., may be added.
The layer A (10) may be constituted of a single layer so long as this layer includes the polycarbonate resin as

a main component, or may be configured of superposed layers in which a plurality of polycarbonate resins differing, for example, in the content of structural units derived from a dihydroxy compound having, as part of the structure thereof, a site represented by formula (1) each constitute at least one layer.

However, according to the present invention, the layer A is an embossed layer comprising a polycarbonate resin which contains 50% by mole or higher of the structural unit derived from a dihydroxy compound having a site of formula (1) as a part of the structure thereof.

It is preferred that the thickness of the layer A (10) should be 30 μm or more. From the standpoint of ensuring a surface hardness of the coating resin sheet-metal laminate without fail, it is especially preferred that the thickness of the layer A (10) should be 40 μm or more. Furthermore, in the case, for example, where a relatively deep embossed design is desired to be imparted, it is preferred that the thickness of the layer A (10) should be 50 μm or more. The upper limit thereof is not particularly limited. However, the upper limit thereof is preferably 120 μm or less, especially preferably 105 μm or less. Thus, a reduction in the thickness of the coating resin sheet-metal laminate can be attained while sufficiently ensuring the surface hardness and bending processability of the laminate.

In the case where the layer A (10) is desired to be inhibited from suffering embossment disappearance upon immersion in boiling water, this property being required especially of wall materials for unit baths and the like, it is preferred to regulate the layer A (10) so as to have a tensile modulus at 100°C of 600-6,000 MPa. The lower limit thereof is more preferably 800 MPa or higher, even more preferably 1,000 MPa or higher, and the upper limit thereof may be more preferably 5,000 MPa or less, even more preferably 4,000 MPa or less. The tensile modulus of the layer A (10) can be regulated so as to be within that range by suitably regulating the composition for polymerization for producing the resin which constitutes the layer A (10).

By regulating the tensile modulus at 100°C of the layer A (10) to 600-6,000 MPa, embossment disappearance can be inhibited in applications such as wall materials for unit baths. Incidentally, the tensile modulus at 100°C of the layer A (10) is measured by the method as provided for in JIS K 7161.

Methods for forming the layer A (10) are not particularly limited. For example, it is possible to use various film formation techniques including extrusion molding and calendering. However, it is especially preferred to use T-die casting.

<Colored Layer (Layer B)>

In the coating resin sheet-metal laminate of the invention, a layer B (20) can be further disposed as a colored layer. It is preferred that the layer B (20) should be constituted of a resin composition obtained by adding a pigment to a thermoplastic resin according to need for purpose of, for example, imparting design attractiveness, imparting the visual effect of hiding the metal sheet, or improving the coloration of the layer D (40) constituting a printed layer. However, the material of the layer B (20) is not always limited.

The layer B (20) may be constituted of a thin film of a metal, e.g., aluminum, or a metal oxide, e.g., aluminum oxide, and the thin film may be one formed by disposing a so-called aluminum foil or the like using an adhesive according to need or may be one formed by any of various vapor deposition techniques.

The thermoplastic resin to be used when the layer B (20) is constituted of the resin composition is not particularly limited. However, it is preferred to select the resin from resins generally called (meth)acrylic resins or (meth)acrylic ester resins. Preferably, the thermoplastic resin is a (meth)acrylic ester resin.

It is especially preferred that the thermoplastic resin should be an acrylic resin which contains a crosslinked rubber elastomer ingredient. It is preferred that the crosslinked rubber elastomer ingredient should be a core-shell type copolymer composition obtained by forming a (meth)acrylic ester resin by graft polymerization using an acrylic resin-based crosslinked rubber elastomer ingredient as cores. It is therefore preferred that the thermoplastic resin should be a (meth)acrylic ester resin which contains the copolymer composition.

Such acrylic resins containing the crosslinked rubber elastomer ingredient are on the market under the names of soft acrylic, flexible acrylic, etc. Recently, some of such acrylic resins are on the market under the name of calender acrylic, etc.

Due to the crosslinked rubber elastomer ingredient, melt tension can be imparted to the sheet. Formation of this sheet by calendering is less apt to encounter film formation difficulties due to drawdown caused by insufficient melt tension. Furthermore, the crosslinked rubber elastomer ingredient further has the function of imparting releasability from metal rolls, and brings about an advantage that the sheet can be easily formed by calendering without requiring a special measure with regard to a lubricant, etc.

The feature that the sheet has high melt tension and low tackiness to heated metals is preferred also from the standpoint of improving suitability for embossing. For example, when a resin sheet obtained by laminating a layer A (10) to a layer B (20) is subjected in the invention to impartation of an embossed design with the embossing machine (200) shown in Fig. 2, the heated resin sheet can be prevented from suffering width-direction shrinkage, rumpling, breakage, etc.

The pigment to be used when the layer B (20) is constituted of the resin composition may be a pigment which is in general used for that purpose. With respect to the addition amount thereof also, the pigment may be added in the

amount generally used for that purpose.

In the case where the resin is to be colored in a whitish tint, use may be made, for example, of a method in which a titanium oxide pigment, which has a high hiding effect and which exerts little influence on resin sheet processability because of the fine particle diameter thereof, is used as a base and an organic or inorganic chromatic pigment is added in a small amount for tint regulation.

With respect to the visual effect of hiding the underlying layer, the importance thereof varies depending on applications. One measure is as follows. Coating resin sheet-metal laminates for use as interior building materials are frequently required to have an opacity, as measured in accordance with JIS K5600, of 0.98 or higher. Conversely, there may be a technique in which the coloration and hiding properties of the layer B (20) are purposely reduced in order to reflect the color or pattern design of the underlying layer.

Various additives may be added to the layer B (20) in suitable amounts so long as the addition thereof does not impair the properties of the layer. Examples of general additives include various antioxidants including phosphorus-compound, phenolic, and other antioxidants, process stabilizers including lactone-based and other stabilizers, heat stabilizers, ultraviolet absorbers, hindered-amine-based radical scavengers, impact modifiers, processing aids, metal deactivators, antibacterials/fungicides, antistatic agents, flame retardants, pigment dispersion improvers, and fillers/extenders.

Methods for forming the layer B (20) are not particularly limited. For example, in the case where the layer B (20) constituted of the resin composition described above is to be formed, use can be made of T-die molding, inflation molding, calendering, and other extrusion molding techniques. In the case where no interlayer is disposed between the layer A (10) and the layer B (20), the films may be formed by coextrusion molding. It is preferred to form the layer B (20) by calendering, which is highly capable of accommodating small-lot production, among those techniques.

It is preferred that the layer B (20) should have a tensile elongation at break as measured at 23°C of 100-350%, from the standpoint of ensuring the processability of the sheet or the coating resin sheet-metal laminate. The lower limit thereof is more preferably 125% or higher, even more preferably 150% or higher, and the upper limit thereof is more preferably 325% or less, even more preferably 300% or less. The tensile elongation at break at 23°C of the layer B (20) is measured by the method which will be described later in the Examples.

So long as the lower limit of the tensile elongation at break thereof is within that range, the layer B (20) has excellent processability such as suitability for laminating integration and embossing. So long as the upper limit thereof is within that range, this layer B (20), even when laminated to the layer A (10) having a high surface hardness, enables the coating resin sheet-metal laminate to retain a high surface hardness.

From the standpoint of the stability of formation of the layer B (20) by calendering and, for example, in view of the fact that the layer B (20) functions as a tension-imparting layer when an embossed design is imparted to the heated laminated sheet with the embossing machine (200) shown in Fig. 2, the lower limit of the thickness of the layer B (20) is preferably 45 μm or more, especially preferably 70 μm or more.

On the other hand, the upper limit of the thickness of the layer B (20) is preferably 270 μm or less, especially preferably 200 μm or less. When the layer B (20) has a thickness within that range, a reduction in thickness can be attained while sufficiently ensuring the surface hardness and bending processability of the coating resin sheet-metal laminate.

<Visible-light-transmitting Layer (Layer C)>

A visible-light-transmitting layer (layer C) can be further disposed in the coating resin sheet-metal laminate of the invention. It is preferred that the layer C (30) should be disposed between the layer A and the metal layer. It is preferred that the layer C (30) should contain platy glittering particles.

The thermoplastic resin to be used in the layer C (30) preferably is a thermoplastic resin having transparency to visible light, and more preferably is a thermoplastic resin which has transparency to visible light and has a tensile elongation at break at 23°C of 100% or higher.

Examples of the resin ingredient of the layer C (30) include the resin which constitutes the layer A (10) including all disclosed examples thereof, crystalline polyester resins such as poly(butylene terephthalate) (PBT) resins, poly(trimethylene terephthalate) (PTT) resins, and poly(ethylene terephthalate) (PET) resins, noncrystalline or lowly crystalline polyester resins having the structure of poly(ethylene terephthalate) in which the diol moieties or dicarboxylic acid moieties have been partly replaced, aromatic polycarbonate resins, blends of these resins, acrylic resins such as poly(methyl (meth)acrylate) (PMMA), resin compositions which have flexibility imparted thereto by adding a rubber ingredient while retaining transparency, such as acrylonitrile/styrene copolymer resins (AS resins) and methyl (meth)acrylate/styrene copolymer resins (MS resins), and various polyolefin resins which are lowly crystalline or noncrystalline and have relatively satisfactory transparency, such as poly(4-methyl-1-pentene).

It is most preferred to use the resin constituting the layer A (10), among those resins, from the standpoint that film formation and laminating can be easily attained at a time by coextrusion molding of the layer C (30) and the layer A (10).

In the case where the coating resin sheet-metal laminate of the invention is to be used in an application where bending processability is not required, a transparent resin material other than the resins shown above which has no elongation at break can be used as a resin ingredient for the layer C (30).

It is preferred that the glittering particles to be added to the layer C (30) should be particles obtained by coating the surfaces of platy glass flakes with a thin metal film.

The glittering particles obtained by coating the surfaces of platy glass flakes with a thin metal film have higher surface smoothness as compared with the titanium oxide-coated mica and aluminum powder which are generally frequently used as glittering particles. An exceedingly high sense of glitter can hence be obtained. These glittering particles are suitable for use in obtaining a glittering design such as scattered stars, as in the invention.

Although titanium oxide-coated mica or the like has conventionally been used frequently as glittering particles, there have been cases where the matrix resin is degraded by the photocatalysis of the titanium oxide. In contrast, the glittering particles to be used in the invention are less apt to pose such a problem.

It is preferred that the glittering particles should have an average particle diameter larger than 20 μm but not larger than 100 μm. It is preferred that the glittering particles should have an average thickness of 1-10 μm.

By regulating the glittering particles so as to have an average particle diameter of 20 μm or more, a glittering design which as a whole looks like scattered stars can be made to appear.

On the other hand, by regulating the glittering particles so as to have an average particle diameter of 100 μm or less, the glittering particles are inhibited from being broken in a process where shearing is applied thereto, such as production of a master batch of the resin composition for constituting the layer C (30) or extrusion thereof, while satisfactorily maintaining the visibility of the individual glittering particles, thereby enabling a sufficient design effect to be produced. Furthermore, in the case where the coating resin sheet-metal laminate of the invention is subjected to secondary processing, e.g., bending, the laminate can be inhibited from suffering a processing failure due to resin layer cracking that occurs from large-diameter particles.

By regulating the average thickness of the glittering particles to 1 μm or more, the glittering particles, in this case also, can be inhibited from breaking or deforming in a process where shearing is applied thereto.

On the other hand, by regulating the average thickness thereof to 10 μm or less, failures such as poor flowability of the layer C (30), streaking, and pinhole formation can be inhibited from occurring when the layer C (30) is produced by extrusion molding. The average thickness thereof is more preferably 6 μm or less.

With respect to the distribution of sizes, the glittering particles to be used in the invention have a particle diameter distribution which has some degree of width. With respect to the thickness thereof, however, the glittering particles have exceedingly satisfactory thickness evenness because of the nature of the production process in which ultrathin glass films are broken to obtain flakes. The glittering particles have a feature in that extrusion molding of the layer C (30) is less apt to result in failures due to the coexistence of extremely thick particles.

The amount of the glittering particles to be added, per 100% by weight the whole resin ingredient for the layer C (30), is preferably 0.5% by weight or more, more preferably 0.8% by weight or more, and is preferably 5.0% by weight or less, more preferably 2.5% by weight or less. When the glittering particles are added in an amount within that range, the resultant sense of glitter is neither too weak nor evenly too strong and a sufficient and satisfactory sense of design can be obtained. The addition amount range hence is suitable.

In the case where the layer C (30) contains a thermoplastic resin which has transparency to visible light, the content of the platy glittering particles in the layer C (30) is preferably 0.5-5.0% by weight per 100% by weight the thermoplastic resin having transparency to visible light.

By adding the platy glittering particles in an amount within that range, a glittering design such as scattered stars can be obtained while maintaining excellent transparency to visible light.

It is preferred that the glittering particles to be used in the invention should have an aspect ratio [(average particle diameter (μm))/(average thickness (μm))] of 15-40. When the glittering particles have an aspect ratio regulated so as to be within that range, these glittering particles, when caused to flow during extrusion molding, are apt to be oriented so that the flat surfaces thereof become parallel to the surfaces of the sheet being formed. A sense of high glitter is hence efficiently obtained.

Examples of the glittering particles to be used in the invention include trade name "Metashine", manufactured by Nippon Sheet Glass Co., Ltd.; various grades differing in particle diameter/thickness are available. Preferred of the "Metashine" series are ones in which thin films of silver and nickel are used as thin metal films, because a sense of intense glitter is obtained therewith.

Methods for forming the layer C (30) are not particularly limited, and ordinary techniques for forming a thin sheet, such as T-die molding and calendering, can be used without limitations. Especially preferred of these, from the standpoint of production efficiency, is a method in which the resin constituting the layer A (10) is used as a matrix as described above and the layer C (30) in the state of having been subjected to laminating integration to the layer A (10) is formed by coextrusion molding using a multi-manifold or a feed block.

<Printed Layer (Layer D)>

A printed layer (layer D) can be further disposed in the coating resin sheet-metal laminate of the invention. The layer D (40) is disposed by a known printing technique such as gravure printing, offset printing, screen printing, etc.
The layer D (40) may have any desired design such as, for example, the grain of stone, the grain of wood, a geometrical pattern, or an abstract pattern. The layer D (40) may be one formed by partial printing or solid printing, or may be composed of a layer formed by partial printing and a layer formed by solid printing.
The layer D (40) may be formed by printing on a surface of the layer A (10), or may be formed by printing on that surface of either an interlayer, e.g., the layer B or layer C, or the metal layer which faces the layer A (10).
The printing ink to be used for forming the layer D (40) is not particularly limited in the pigment and solvent contained therein, and pigments and solvents which are in general use can be applied thereto. In particular, a printing ink which contains an acrylic resin or a urethane resin is suitable because even when the layer D (40) is disposed therewith, the coating resin sheet-metal laminate of the invention can be produced without raising troubles such as, for example, delamination.

<Outer Layer (Layer E)>

An outer layer (layer E) can be further disposed in the coating resin sheet-metal laminate of the invention. In the coating resin sheet-metal laminate of the invention, the layer E is disposed on that surface of the layer A which is opposite to the metal layer side thereof. It is preferred that the layer E should have transparency to visible light.
The disposition of the layer E makes it possible to impart the function of protecting the surface when an embossed design is imparted to the layer A in the manner which will be described later. Furthermore, when the layer E has transparency to visible light, the embossed design can be sufficiently viewed and a coating resin sheet-metal laminate having better design attractiveness can be provided. In addition, it is also possible to further improve the surface hardness of the coating resin sheet-metal laminate of the invention.
Preferred resins for use in the layer E are not particularly limited. Examples thereof include thermoplastic resins having transparency to visible light. Examples of the thermoplastic resins having transparency to visible light include the resin which constitutes the layer A (10) including all disclosed examples thereof, crystalline polyester resins such as poly(butylene terephthalate) (PBT) resins, poly(trimethylene terephthalate) (PTT) resins, and poly(ethylene terephthalate) (PET) resins, noncrystalline or lowly crystalline polyester resins having the structure of poly(ethylene terephthalate) in which the diol moieties or dicarboxylic acid moieties have been partly replaced, aromatic polycarbonate resins, blends of these resins, acrylic resins such as poly(methyl (meth)acrylate) (PMMA), acrylonitrile/styrene copolymer resins (AS resins), and methyl (meth)acrylate/styrene copolymer resins (MS resins).
Furthermore, thermosetting resins, ultraviolet-curable resins, and the like which are in general wide use can also be applied.
Methods for disposing the layer E in the coating resin sheet-metal laminate of the invention are not particularly limited. Use can be made of a method in which the surface (layer A) of the coating resin sheet-metal laminate is embossed in the manner that will be described later and, thereafter, the layer E is further formed by thermal laminating, extrusion laminating, any of various coating techniques, etc.

<Metal Layer>

Examples of the metal layer to be used in the configuration of the coating resin sheet-metal laminate of the invention include various steel sheets and plates, such as hot-rolled steel sheets, cold-rolled steel sheets, hot-dip galvanized steel sheets, electrogalvanized steel sheets, tin-plated steel sheets, and stainless-steel sheets, aluminum sheets and plates, and aluminum-alloy sheets and plates. These metal layers may be used after having undergone an ordinary chemical treatment.
Also usable is a metal layer formed on at least one surface of a resin sheet by vapor-depositing a metal thereon or by applying a solution containing a metal compound to the surface and then depositing a metal layer through reduction, etc. The thickness of the metal layer varies depending on applications, etc. However, the thickness thereof can be selected from the range of 0.1-10 mm.

<Laminating Integration for Resin Sheet Formation, and Impartation of Embossed Design to Layer A (10)-side Surface>

In the case where a layer A (10) formed by extrusion molding and a layer B (20) and/or layer C (30) separately formed by, for example, calendering are subjected to laminating integration by thermal fusion laminating, this integration can be conducted in a preheating area within the embossing machine (200) shown in Fig. 2.
Specifically, the layer A (10) and the layer B (20) and/or layer C (30) are superposed optionally together with

various interlayers, and the resultant sheet stack 7 is introduced into the embossing machine (200) shown in Fig. 2. This sheet stack 7 is brought into contact with a heated metal roll 1 to heat the sheet stack 7 by preheating, and the sheet temperature is thereafter further elevated with a non-contact type infrared heater 3. Thereafter, the web is passed through the nip between an embossing roll 5 and a nip roll 4. As a result, the embossing pattern is transferred to the layer A (10), and the layer A (10) is cooled with a cooling roll 6 to fix the imparted embossed pattern. The embossing machine (200) has such structure.

In the case where a layer D (40) is to be disposed, it is preferred to dispose the layer D (40), prior to the thermal fusion laminating, by printing on a surface of the layer A (10) or on that surface of an interlayer, e.g., the layer B (20) or the layer C (30), or of the metal layer which faces the layer A (10).

In the case where a layer B (20) is not superposed, an embossed design can be imparted in the same manner by passing the web through the embossing machine (200) shown in Fig. 2. In this case, however, it is difficult to control a set temperature, etc., because there is a possibility that the thermally softened layer A (10) might suffer width-direction shrinkage, rumpling, breakage, or the like. It is therefore preferred to superpose and dispose a layer B (20) as described above and thereby improve suitability for embossing.

With respect to the impartation of an embossed pattern, the embossing is conducted after the sheet is heated to a temperature higher by at least 15°C than the glass transition temperature (Tg) of the layer A (10). In the case where the layer A (10) alone is processed at a temperature within that range, problems such as sheet stretching, rumpling, etc. are apt to arise because the elastic modulus of the sheet sharply changes with changing temperature in that temperature range. However, the layer B (20) constituted of a calender acrylic which contains a crosslinked elastomer ingredient functions as a base sheet to enable stable embossing.

Furthermore, in the case where the layer E described above is to be disposed, use can be made of a method in which the layer A (10) is embossed and, thereafter, the layer E is superposed on and integrated with that surface of the layer A which is opposite to the metal layer side thereof, by a known technique such as thermal laminating, extrusion laminating, or any of various coating techniques.

Methods for laminating integration for resin sheet(s) to be used in the coating resin sheet-metal laminate of the invention are not limited to those techniques, and use may be made, for example, of wet laminating in which an adhesive for dry laminating or the like is used.

The overall thickness of the resin sheet to be used in the coating resin sheet-metal laminate of the invention is preferably regulated to 60-300 μm. By regulating the overall thickness thereof to 60 μm or more, the effect of protecting the coated base can be produced. When the overall thickness thereof is 300 μm or less, forming dies which have conventionally been used for the forming, e.g., bending, of metal sheets coated with a flexible PVC resin can be applied. It is therefore possible to maintain the accommodation of the resin sheet to processing equipment.

<Processes for Producing the Coating Resin Sheet-Metal Laminate and Applications thereof>

The coating resin sheet-metal laminate of the invention can be produced by laminating the resin sheet to the metal sheet or plate by a conventionally known technique. Alternatively, the laminate can be produced by forming a metal layer on at least one surface of the resin sheet by vapor-depositing a metal on the surface or by applying a solution containing a metal compound to the surface and depositing a metal layer thereon through reduction, etc.

When the resin sheet to which an embossed pattern has been imparted with the embossing machine (200) is laminated to a metal sheet or plate, an adhesive may be applied according to need.

Examples of the adhesive include thermosetting adhesives in general use, such as acrylic adhesives, epoxy adhesives, urethane adhesives, and polyester adhesives.

Since the layer B (20) is an acrylic resin, it is preferred to use an acrylic adhesive from the standpoint of obtaining satisfactory adhesion. However, usable adhesives should not be construed as being limited to acrylic adhesives.

For producing the coating resin sheet-metal laminate using an adhesive, coating equipment in general use such as, for example, a reverse coater or a kiss coater is used. Any of the adhesives shown above is applied to the metal surface to which the resin sheet is to be bonded, in such an amount that the resultant adhesive film after drying has a thickness of about 2-10 μm.

Subsequently, the coated surface is dried and heated with an infrared heater or a hot-air heating oven. While the surface temperature of the metal sheet or plate is kept at about 190-250°C, the surface thereof is immediately coated with the resin sheet by means of a roll laminator so that the layer A (10) side constitutes a surface. The resultant laminate is cooled. Thus, a coating resin sheet-metal laminate is obtained. Since the polycarbonate resin used in the layer A (10) in the invention has satisfactory heat resistance as described above, it is possible to inhibit or prevent embossment disappearance in this process.

Applications of the coating resin sheet-metal laminate of the invention are not particularly limited. However, the coating resin sheet-metal laminate is suitable for use in applications such as front doors and various building materials for dwelling houses, unit baths, furniture members made of steel, the housings of electrical/electronic appliances, and

automotive interior materials.

For example, with respect to front doors and various building materials for dwelling houses, the merchandise lives are generally long. The resin sheets with which the metal is coated hence are especially required to have resistance to age deterioration such as yellowing, cracking, peeling, and embrittlement. Since the coating resin sheet-metal laminate of the invention has exceedingly high weatherability, such property requirements can be fully satisfied.

With respect to unit baths, members therefor are generally colored in a light tint, e.g., white. The members hence are especially required to have yellowing resistance. Furthermore, since the environment involves use of warm water, the members are especially required to have resistance to high-temperature embossment disappearance. Since the coating resin sheet-metal laminate of the invention has exceedingly high embossed-design heat resistance as well as highly excellent weatherability, such property requirements can be fully satisfied.

With respect to other applications such as furniture, housings, and automotive interior materials, the surfaces thereof are frequently touched by human hands or wiped with a dustcloth or the like. Consequently, surface hardness is especially required besides weatherability. Since the coating resin sheet-metal laminate of the invention has high surface hardness besides high weatherability and, in particular, can be highly increased in surface hardness by providing the laminate with an outer layer such as, for example, a rigid resin layer or a hardcoat layer, such property requirements can be fully satisfied.

## Examples

Examples are given below in order to explain the invention more specifically and in more detail. However, the invention should not be construed as being limited by the following Examples. The standards used for measuring the properties of the coating resin sheet-metal laminates shown in the Examples and Comparative Example and the test methods therefor are as follows.

### (a) Production of Resin Sheets and Coating Resin Sheet-Metal Laminates

#### 1) Kneading of Starting Materials for Layers A and Formation of Layers A by Extrusion

Isosorbide and 1,4-cyclohexanedimethanol were used as dihydroxy compounds to obtain a polycarbonate copolymer [(structural units derived from isosorbide):(structural units derived from 1,4-cyclohexanedimethanol) = 70:30 (mol%)] by melt polymerization. The polycarbonate copolymer obtained had a glass transition temperature of 120°C and a reduced viscosity of 0.56 dL/g.

A hundred percents by weight the copolymer was mixed beforehand with 4% by weight trade name "Tinuvin 1577FF", manufactured by BASF A.G., as an ultraviolet absorber, and this mixture was melt-kneaded and pelletized using a corotating twin-screw extruder having a bore diameter of 35 mm at a cylinder temperature of 200-230°C.

Subsequently, a T-die was connected to a vented single-screw extruder having a bore diameter of 65 mm, and a transparent sheet (A-1) having a thickness of 50 μm and a width of 1,100 mm was obtained while taking off the sheet with a casting roll. The copolymer into which the ultraviolet absorber had been incorporated in an amount of 2% by weight (A-2) and the copolymer into which no ultraviolet absorber had been incorporated (A-3) were formed into transparent sheets in the same manner.

The copolymer composition was changed to 50:50 (mol%) (glass transition temperature = 101°C; reduced viscosity = 0.57 dL/g), and this copolymer was mixed with 4% by weight the ultraviolet absorber to obtain a mixture (A-4). That composition was changed to 30:70 (mol%) (glass transition temperature = 80°C; reduced viscosity = 0.69 dL/g), and this copolymer was mixed with 4% by weight the ultraviolet absorber to obtain a mixture (A-5) which is included for reference purposes. These mixtures also were formed into transparent sheets in the same manner.

As a Comparative Example for the layers A, a transparent sheet was formed in the same manner from a mixture (A-6) obtained by using "Iupilon H4000", manufactured by Mitsubishi Engineering-Plastics Corp., as a polycarbonate polymer produced using bisphenol A as a dihydroxy compound and by mixing the polymer with 4% by weight the ultraviolet absorber.

#### 2) Formation of Layer B by Calendering

Seventy percents by weight "Metablen W-377", manufactured by Mitsubishi Rayon Co., Ltd., was mixed beforehand with 30% by weight "Parapet SA", manufactured by Kuraray Co., Ltd., 0.5% by weight "Metablen L-1000", manufactured by Mitsubishi Rayon Co., Ltd., and 20% by weight titanium oxide as a white pigment.

The mixture was rolled into a sheet using a calendering apparatus constituted of four metal rolls and equipped with pre-kneading rolls as a preceding step, under the conditions of a roll temperature of 170-185°C. Thus, a white sheet having a thickness of 150 μm and a width of 1,200 mm (B-1) was produced.

"Metablen W-377" is an acrylic resin which contains an acrylic-resin-based crosslinked rubber elastomer ingredient in a large amount, and is on the market as a flexible acrylic resin for calendering.

"Parapet SA" is on the market as a flexible acrylic resin which contains an acrylic-resin-based crosslinked rubber elastomer ingredient in a large amount and which combines high flexibility and satisfactory flowability. This resin is especially suitable for use as a substitute for flexible PVC for injection molding.

"Metablen L-1000" is an external acrylic lubricant, and is on the market as an additive for use in applications in which the additive is added in a small amount in order to attain stable productivity or inhibit bleeding.

3) Kneading of Starting Materials for Layer C and Formation of Layer AC by Coextrusion

A hundred percents by weight of the polycarbonate copolymer used in the layers A was mixed beforehand with 1.0% by weight "Metashine MC5090PS", manufactured by Nippon Sheet Glass Co., Ltd., as glittering particles, and the mixture was pelletized under the same production conditions as for the starting materials for the layers A. A multi-manifold T-die was connected to two vented single-screw extruders having a diameter of 65 mm, and a laminated sheet having an A-layer thickness of 30 μm, a C-layer thickness of 60 μm, and a width of 1,100 mm was obtained while taking off the sheet with a casting roll.

4) Laminating Integration of Layer A with Layer B and Impartation of Embossed Design

The continuous-process embossing machine shown as an example in Fig. 2, which is in general use for embossing flexible PVC sheets, was used to conduct the thermal fusion laminating integration of a layer A (or the layer AC formed by coextrusion with a layer C) to the layer B (or a layer BD obtained by printing the layer B) and to impart an embossed design (300).

The heating drum was set at 140°C. The layer A and the layer B were fed from two unwinding rolls as shown in Fig. 2, and were integrated with each other by thermal fusion laminating in the area where the layers came into contact with the heating drum. Subsequently, the integrated sheet by lamination was heated with the non-contact type infrared heater until the sheet surface temperature reached 180°C, and an embossed design was imparted thereto with the embossing roll.

The embossed pattern is composed of precise embossed parts (310) each having 8 mm × 8 mm square shape and a mirror surface part (320) which has not been embossed. In each precise embossed part, prism-shaped fine protrusions having an Ry (maximum height) of 14 μm and an Ra (center-line average surface roughness) of 2.2 μm have been disposed.

5) Production of Coating Resin Sheet-Metal Laminates

Subsequently, a thermosetting acrylic adhesive in general use for PVC-sheet-coated metal sheets was applied to a galvanized steel sheet in such an amount that the resultant adhesive film after drying had a thickness of about 2-4 μm. The coated surface was subsequently dried and heated with a hot-air heating oven and an infrared heater. The surface temperature of the galvanized steel sheet, which had a thickness of 0.45 mm, was set at 225°C, and the laminated sheet was immediately applied thereto using a roll laminator. The resultant laminate was cooled with water. Thus, a steel sheet coated with a resin sheet bearing an embossed design was produced.

(b) Evaluation of the Coating Resin Sheet-Metal Laminates

Properties of the coating resin sheet-metal laminates obtained were evaluated through the following tests. The layer configurations of the coating resin sheet-metal laminates obtained are shown in Table 1, and the results of evaluation of the properties of the coating resin sheet-metal laminates are shown in Table 2.

1) Tensile Elongation at Break at 23°C

The layer B alone which had been cut into the test piece shape in accordance with JIS K7127 was subjected to a tensile test to measure the elongations at break thereof using a universal tester (manufactured by INTESCO Co., Ltd.) installed in a 23°C thermostatic room. The test was made at a test rate of 200 mm/min with respect to the direction of flow during film formation (MD) and the direction perpendicular thereto (TD), the number of measurements for each direction being 5 (n=5). The measured values were averaged. As a result, the elongation at break in the MD was 289%, and that in the TD was 252%.

2) Embossing Pattern Receptibility

Each coating resin sheet-metal laminate was visually examined and evaluated. The laminates to which the embossing pattern had been sufficiently transferred were rated as "A". The laminates which showed insufficient receptibility and in which, for example, the recesses and protrusions imparted by embossing were rounded were rated as "B". The laminates in which the embossed pattern was unclear or which had shrunk or become rough regardless of the embossed pattern were rated as "C".

3) Embossed-design Heat Resistance

Each coating resin sheet-metal laminate was immersed in boiling water for 1 hour, and was then visually examined and evaluated. The laminates which showed substantially no change through the immersion were rated as "A". The laminates which had suffered slight embossment disappearance were rated as "B". The laminates in which the embossed pattern had become unclear were rated as "C".

4) Evaluation of Processability

Each coating resin sheet-metal laminate was subjected to an impact bending adhesion test, and the surface state of the resin sheet in the bent portion was visually examined and evaluated. The laminates in which the resin layer had cracked and which were deemed not to have practical processability were rated as "C". The laminates which had suffered minute cracks or which had suffered blushing although no cracks were visually observed therein were rated as "B". The laminates in which none of these abnormalities was observed were rated as "A".

The test was conducted in the following manner. Samples having dimensions of 50 mm × 150 mm were cut out of the coating resin sheet-metal laminate respectively along the lengthwise direction (MD) and the width direction (TD). The samples were allowed to stand still in a 23°C thermostatic room for 1 hour or more and then folded in two at 180° (inner radius, 2 mm) using a manual bending tester. A cylindrical weight having a diameter of 75 mm and a mass of 5 kg was allowed to fall freely on the resultant folded samples from a height of 50 cm.

5) Surface Hardness

Using pencils of 2B and B, a line was drawn on each coating resin sheet-metal laminate which had been cut into a size of 80 mm × 60 mm, in accordance with JIS S1005 using a jig which was capable of line drawing with a pencil while keeping the pencil at an angle of 45° and applying a load of 1 kg thereto. The surface state of the resin sheet in the portion where the line had been drawn was visually examined and evaluated. The laminates in which the resin sheet had not been scratched with the pencil of B were rated as "A". The laminates in which the resin sheet had been scratched with the pencil of B but not been scratched with the pencil of 2B were rated as "B". The laminates in which the resin sheet had been scratched even with the pencil of 2B were rated as "C".

6) Accelerated Weathering Test

A test piece having dimensions of 60 mm × 50 mm was cut out of each coating resin sheet-metal laminate, and an accelerated weathering test was conducted using an Erichsen tester as provided for in JIS B7729, which is mentioned in JIS K6744, and using a sunshine weatherometer as a tester for accelerated weathering (manufactured by Suga Test Instruments Co., Ltd.).

The conditions for the accelerated weathering test included a black panel temperature of 63°C and a cycle time of 120 minutes (irradiation, 102 minutes; spraying, 18 minutes). The difference in color between the sample which had undergone 3,000-hour exposure and the sample which had undergone no exposure was measured with color and color-difference meter CR-200 (manufactured by Minolta Co., Ltd.).

The laminates in which the color difference was 3 or less were rated as "A". The laminates in which the color difference was larger than 3 but not larger than 10 were rated as "B". The laminates in which the color difference was larger than 10 were rated as "C".

[Table 1]

Table 1 (Example 7: reference)

| Layer configuration | Example 1 | Example 2 | Example 3 | Example 4 | Example 5 | Example 6 | Example 7 | Comparative Example 1 |
|---|---|---|---|---|---|---|---|---|
| Layer A | A-1 | A-1 | A-1 | A-2 | A-3 | A-4 | A-5 | A-6 |
| Layer C | - | C-1 | - | - | - | - | - | - |
| Layer D | - | - | D-1 | - | - | - | - | - |
| Layer B | B-1 | B-1 | B-1 | B-1 | B-1 | B-1 | B-1 | B-1 |

[Table 2]

Table 2

| Evaluation item | Example 1 | Example 2 | Example 3 | Example 4 | Example 5 | Example 6 | Example 7 | Comparative Example 1 |
|---|---|---|---|---|---|---|---|---|
| Embossing pattern receptibility | A | A | A | A | A | A | B | A |
| Embossed-design heat resistance | A | A | A | A | A | A | B | A |
| Processability | A | A | A | A | A | A | A | A |
| Surface hardness | A | A | A | A | A | A | B | B |
| Weatherability | A | A | A | A | A*1 | A | A | C*2 |

*1: The laminate withstood practical use, but the layer B had suffered a slight color change.
*2: The layer A yellowed considerably, and the laminate did not withstand practical use.

As shown in Table 1 and Table 2, the coating resin sheet-metal laminates of the invention each had exceedingly high weatherability so long as the laminates were within the range specified in the invention. Furthermore, each laminate was excellent in terms of embossing pattern receptibility, embossed-design heat resistance, processability, and surface hardness while attaining a satisfactory balance thereamong. In contrast, the Comparative Example was inferior to the Examples in weatherability and surface hardness.

It was found from these results that the coating resin sheet-metal laminate of the invention is a coating resin sheet-metal laminate which is excellent in terms of weatherability, embossing pattern receptibility, embossed-design heat resistance, processability, and surface hardness.

The invention was explained above with reference to embodiments which are considered to be most practical and preferred at present. However, the invention should not be construed as being limited to the embodiments disclosed herein, and can be suitably modified within a range that does not depart from the idea of the invention which can be understood from the claims and the whole description. It should be understood that any resin sheet which includes such a modification and coating resin sheet-metal laminates including the resin sheet are also included in the technical scope of the invention.

While the invention has been described in detail and with reference to specific embodiments thereof, it will be apparent to one skilled in the art that various changes and modifications can be made therein without departing from the scope thereof. This application is based on a Japanese patent application filed on March 3, 2010 (Application No. 2010-046628).

Description of the Reference Numerals

1 Heating roll
2 Takeoff roll
3 Infrared heater
4 Nip roll
5 Embossing roll
6 Cooling roll
7 Resin sheet
10 Layer A
20 Layer B
30 Layer C; visible-light-transmitting layer
40 Layer D; printed layer
50 Metal sheet
110 Coating resin sheet-metal laminate of basic configuration
120 Coating resin sheet-metal laminate bearing colored design
130 Coating resin sheet-metal laminate bearing glittering design
140 Coating resin sheet-metal laminate bearing printed design
150 Coating resin sheet-metal laminate bearing embossed design
200 Embossing machine
300 Embossed pattern
310 Precise embossed part of embossed pattern (all the eight embossed parts in Fig. 3 are the same)
320 Mirror surface part of embossed pattern

## Claims

1. A coating resin sheet-metal laminate **characterized by** comprising a metal sheet and, formed thereover, an embossed resin layer (layer A) comprising a polycarbonate resin which contains 50% by mole or higher as a content of a structural unit derived from a dihydroxy compound having, as part of the structure thereof, a site represented by the following formula (1)

[Chem. 1]

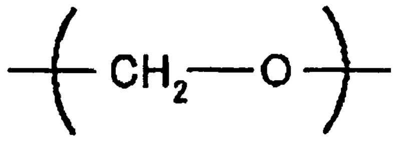

(1)

(The case where the site represented by the above formula (1) is part of $-CH_2-O-H$ is omitted.), wherein the dihydroxy compound is a dihydroxy compound represented by the following formula (2)

[Chem. 2]

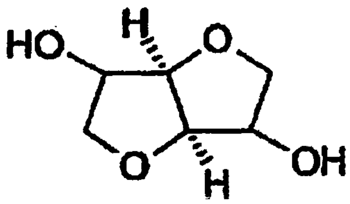

(2)

**2.** The coating resin sheet-metal laminate according to claim 1, wherein the glass transition temperature of the polycarbonate resin as measured by differential scanning calorimetry (DSC) is 100 to 155°C.

**3.** The coating resin sheet-metal laminate as claimed in claim 1 or 2, wherein the polycarbonate resin contains structural units derived from an aliphatic dihydroxy compound and structural units derived from an alicyclic dihydroxy compound.

**4.** The coating resin sheet-metal laminate as claimed in any one of claims 1 to 3, wherein the polycarbonate resin contains 0.0001 to 1 part by weight of an ultraviolet absorber per 100 parts by weight of the polycarbonate resin.

**5.** The coating resin sheet-metal laminate as claimed in claim 4, wherein the ultraviolet absorbers has a melting point in the range of 120 to 250°C.

**6.** The coating resin sheet-metal laminate as claimed in any one of claims 1 to 5, which comprises a colored layer (layer B) disposed between the layer A and the metal sheet.

**7.** The coating resin sheet-metal laminate as claimed in claim 6, wherein the layer B has a tensile elongation at break at 23°C of 100-350%, according to JIS K7127, at a test rate of 200mm/min with respect to MD and TD.

**8.** The coating resin sheet-metal laminate as claimed in claim 6 or 7, wherein the layer B comprises a thennoplastic resin which comprises, as a main component thereof, an acrylic resin containing a crosslinked rubber elastomer ingredient.

**9.** The coating resin sheet-metal laminate as claimed in claim 8, wherein the crosslinked rubber elastomer ingredient is a core-shell type copolymer composition obtained by forming a (meth)acrylic ester resin by graft polymerization using an acrylic resin-based crosslinked rubber elastomer ingredient as cores.

**10.** The coating resin sheet-metal laminate as claimed in any one of claims 1 to 9, which comprises a visible-light-transmitting layer (layer C) disposed between the layer A and the metal sheet.

**11.** The coating resin sheet-metal laminate as claimed in claim 10, wherein the layer C comprises a thennoplastic resin having transparency to visible light and platy glittering particles, the amount of the platy glittering particles being 0.5-5.0% by weight per 100% by weight the thermoplastic resin having transparency to visible light.

**12.** The coating resin sheet-metal laminate as claimed in any one of claims 1 to 11, which comprises a printed layer

(layer D) disposed between the layer A and the metal sheet.

**13.** A process for producing a multilayer structure coating resin sheet-metal laminate according to any one of claims 1 to 12, which comprises laminating either a resin sheet including the layer A or a resin sheet including the layer A and at least one layer selected from the group consisting of the layer B, the layer C, the layer D, and the layer E to the metal sheet.

**14.** A front door comprising the coating resin sheet-metal laminate according to any one of claims 1 to 12.

**15.** A building material comprising the coating resin sheet-metal laminate according to any one of claims 1 to 12.

**16.** A unit bath member comprising the coating resin sheet-metal laminate according to any one of claims 1 to 12.

**17.** A steel furniture member comprising the coating resin sheet-metal laminate according to any one of claims 1 to 12.

**18.** A housing for electrical/electronic appliances comprising the coating resin sheet-metal laminate according to any one of claims 1 to 12.

**19.** An automotive interior material comprising the coating resin sheet-metal laminate according to any one of claims 1 to 12.

## Patentansprüche

**1.** Ein Laminat einer Harzfolienbeschichtung und eines Metalls, **gekennzeichnet durch** Umfassen einer Metallfolie und einer darauf gebildeten geprägten Harzschicht (Schicht A), umfassend ein Polycarbonatharz, das 50 Mol% oder mehr als einen Gehalt einer Struktureinheit aufweist, die von einer Dihydroxyverbindung abgeleitet ist, die als Teil der Struktur davon eine Stelle aufweist, die durch die nachstehende Formel (1) dargestellt ist

[Chem. 1]

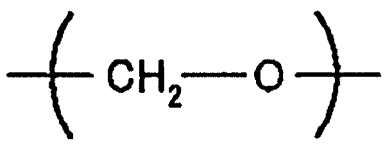

(1)

(Der Fall, bei dem die durch die vorstehende Formel (1) dargestellte Stelle Teil von $-CH_2-O-H$ ist, ist ausgelassen.), wobei die Dihydroxyverbindung eine Dihydroxyverbindung, dargestellt durch die folgende Formel (2), ist

[Chem. 2]

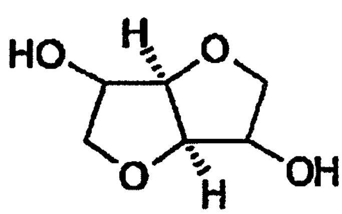

(2)

**2.** Das Laminat einer Harzfolienbeschichtung und eines Metalls nach Anspruch 1, wobei die Glasübergangstemperatur des Polycarbonatharzes, wie mithilfe der Differentialscanningkalorimetrie (DSC) gemessen, 100 bis 155°C beträgt.

**3.** Das Laminat einer Harzfolienbeschichtung und eines Metalls wie in Anspruch 1 oder 2 beansprucht, wobei das Polycarbonatharz Struktureinheiten, die von einer aliphatischen Dihydroxyverbindung abgeleitet sind, und Struktureinheiten, die von einer alicyclischen Dihydroxyverbindung abgeleitet sind, enthält.

**4.** Das Laminat einer Harzfolienbeschichtung und eines Metalls wie in einem der Ansprüche 1 bis 3 beansprucht, wobei das Polycarbonatharz 0,0001 bis 1 Gewichtsteil eines Ultraviolettabsorbers je 100 Gewichtsteile des Polycarbonatharzes enthält.

**5.** Das Laminat einer Harzfolienbeschichtung und eines Metalls wie in Anspruch 4 beansprucht, wobei der Ultraviolettabsorber einen Schmelzpunkt im Bereich von 120 bis 250°C aufweist.

**6.** Das Laminat einer Harzfolienbeschichtung und eines Metalls wie in einem der Ansprüche 1 bis 5 beansprucht, welches eine gefärbte Schicht (Schicht B) umfasst, die zwischen Schicht A und der Metallschicht angebracht ist.

**7.** Das Laminat einer Harzfolienbeschichtung und eines Metalls wie in Anspurch 6 beansprucht, wobei Schicht B eine Zugbruchdehnung bei 23°C von 100-350%, gemäß JIS K7127, bei einer Prüfgeschwindigkeit von 200 mm/Min., bezogen auf MD und TD, aufweist.

**8.** Das Laminat einer Harzfolienbeschichtung und eines Metalls wie in Anspruch 6 oder 7 beansprucht, wobei Schicht B ein thermoplastisches Harz umfasst, das als eine Hauptkomponente davon ein Acrylharz, das einen vernetzten Kautschukelastomerbestandteil enthält, umfasst.

**9.** Das Laminat einer Harzfolienbeschichtung und eines Metalls wie in Anspruch 8 beansprucht, wobei der vernetzte Kautschukelastomerbestandteil eine Copolymerzusammensetzung vom Kern-Schalen-Typ ist, die durch Bilden eines (Meth)acrylesterharzes durch Propfpolymerisation unter Verwendung eines vernetzten Kautschukelastomerbestandteils auf Acrylharzbasis als Kerne erhalten wird.

**10.** Das Laminat einer Harzfolienbeschichtung und eines Metalls wie in einem der Ansprüche 1 bis 9 beansprucht, welches eine sichtbares Licht, übertragende Schicht (Schicht C) umfasst, die zwischen Schicht A und der Metallschicht angebracht ist.

**11.** Das Laminat einer Harzfolienbeschichtung und eines Metalls wie in Anspruch 10 beansprucht, wobei Schicht C ein thermoplastisches Harz mit einer Transparenz gegenüber sichtbarem Licht und flachen glänzenden Teilchen umfasst, wobei die Menge der flachen glänzenden Teilchen 0,5-5.0 Gew.-% je 100 Gew.-% des thermoplastischen Harzes beträgt, wobei das thermoplastische Harz eine Transparenz gegenüber sichtbarem Licht aufweist.

**12.** Das Laminat einer Harzfolienbeschichtung und eines Metalls wie in einem der Ansprüche 1 bis 11 beansprucht, welches eine bedruckte Schicht (Schicht D) umfasst, die zwischen Schicht A und der Metallschicht angebracht ist.

**13.** Ein Verfahren zur Herstellung eines Laminats einer Harzfolienbeschichtung und eines Metalls mit einer mehrschichtigen Struktur nach einem der Ansprüche 1 bis 12, welches Laminieren entweder einer Harzschicht, die Schicht A enthält, oder einer Harzschicht, die Schicht A und mindestens eine Schicht, ausgewählt aus der Gruppe bestehend aus Schicht B, Schicht C, Schicht D und Schicht E, auf die Metallschicht umfasst.

**14.** Eine Haustür, umfassend das Laminat einer Harzfolienbeschichtung und eines Metalls nach einem der Ansprüche 1 bis 12.

**15.** Ein Baustoff, umfassend das Laminat einer Harzfolienbeschichtung und eines Metalls nach einem der Ansprüche 1 bis 12.

**16.** Ein Element einer Badeinheit, umfassend das Laminat einer Harzfolienbeschichtung und eines Metalls nach einem der Ansprüche 1 bis 12.

**17.** Ein Element in Stahlmöbeln, umfassend das Laminat einer Harzfolienbeschichtung und eines Metalls nach einem der Ansprüche 1 bis 12.

**18.** Ein Gehäuse für elektrische/elektronische Geräte, umfassend das Laminat einer Harzfolienbeschichtung und eines Metalls nach einem der Ansprüche 1 bis 12.

**19.** Ein Automobilinnenmaterial, umfassend das Laminat einer Harzfolienbeschichtung und eines Metalls nach einem

der Ansprüche 1 bis 12.

**Revendications**

1. Stratifié de métal-feuille de résine de revêtement **caractérisé en ce qu'**il comprend une feuille de métal et, formée sur son dessus, une couche de résine bosselée (couche A) comprenant une résine de polycarbonate qui contient 50 % en mole ou plus comme une teneur d'une unité structurelle dérivée d'un composé dihydroxy ayant, comme partie de sa structure, un site représenté par la formule (1) suivante

[Chem. 1]

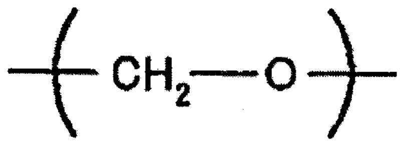

(1)

(le cas où le site représenté par la formule (1) ci-dessus est une partie de $-CH_2-O-H$ est omis), où le composé dihydroxy est un composé dihydroxy représenté par la formule (2) suivante

[Chem. 2]

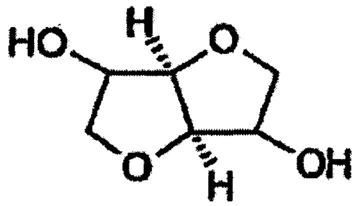

(2)

.

2. Stratifié de métal-feuille résine de revêtement selon la revendication 1, où la température de transition vitreuse de la résine de polycarbonate comme mesurée par calorimétrie différentielle (DSC) est de à 155°C.

3. Stratifié de métal-feuille de résine de revêtement selon la revendication 1 ou 2, où la résine de polycarbonate contient des unités structurelles dérivées d'un composé dihydroxy aliphatique et des unités structurelles dérivées d'un composé dihydroxy alicyclique.

4. Stratifié de métal-feuille de résine de revêtement selon l'une quelconque des revendications 1 à 3, où la résine de polycarbonate contient de 0,0001 à 1 partie en masse d'un absorbant d'ultraviolets pour parties en masse de la résine de polycarbonate.

5. Stratifié de métal-feuille de résine de revêtement selon la revendication 4, dans laquelle l'absorbant d'ultraviolets présente un point de fusion dans l'intervalle de 120 à 250°C.

6. Stratifié de métal-feuille de résine de revêtement selon l'une quelconque des revendications 1 à 5, lequel comprend une couche colorée (couche B) disposée entre la couche A et la feuille de métal.

7. Stratifié de métal-feuille de résine de revêtement selon la revendication 6, où la couche B présente un allongement en traction à la rupture à 23°C de 100-350 %, selon JIS K7127, à une vitesse de test de 200 mm/min par rapport à MD et TD.

8. Stratifié de métal-feuille de résine de revêtement selon la revendication 6 ou 7, où la couche B comprend une résine thermoplastique qui comprend, comme un constituant principal de celle-ci, une résine acrylique contenant un ingrédient d'élastomère de caoutchouc réticulé.

**9.** Stratifié de métal-feuille de résine de revêtement selon la revendication 8, où l'ingrédient d'élastomère de caoutchouc réticulé est une composition de copolymère de type noyau-enveloppe obtenue par formation d'une résine d'ester (méth)acrylique par polymérisation par greffage en utilisant un ingrédient d'élastomère de caoutchouc réticulé à base de résine acrylique comme noyaux.

**10.** Stratifié de métal-feuille de résine de revêtement selon l'une quelconque des revendications 1 à 9, lequel comprend une couche transmettant la lumière visible (couche C) disposée entre la couche A et la feuille de métal.

**11.** Stratifié de métal-feuille de résine de revêtement selon la revendication 10, où la couche C comprend une résine thermoplastique ayant une transparence à la lumière visible et des particules scintillantes plates, la quantité des particules scintillantes plates étant de 0,5-5,0 % en masse pour % en masse de la résine thermoplastique ayant une transparence à la lumière visible.

**12.** Stratifié de métal-feuille de résine de revêtement selon l'une quelconque des revendications 1 à 11, lequel comprend une couche imprimée (couche D) disposée entre la couche A et la feuille de métal.

**13.** Procédé de production d'un stratifié de métal-feuille de résine de revêtement de structure multicouche selon l'une quelconque des revendications 1 à 12, lequel comprend la stratification soit d'une feuille de résine incluant la couche A soit d'une feuille de résine incluant la couche A et au moins une couche choisie dans le groupe constitué de la couche B, la couche C, la couche D, et la couche E à la feuille de métal.

**14.** Porte d'entrée comprenant le stratifié de métal-feuille de résine de revêtement selon l'une quelconque des revendications 1 à 12.

**15.** Matériau de construction comprenant le stratifié de métal-feuille de résine de revêtement selon l'une quelconque des revendications 1 à 12.

**16.** Elément de bain unitaire comprenant le stratifié de métal-feuille de résine de revêtement selon l'une quelconque des revendications 1 à 12.

**17.** Elément de mobilier en acier comprenant le stratifié de métal-feuille de résine de revêtement selon l'une quelconque des revendications 1 à 12.

**18.** Boîtier pour applications électriques/électroniques comprenant le stratifié de métal-feuille de résine de revêtement selon l'une quelconque des revendications 1 à 12.

**19.** Matériau d'intérieur d'automobile comprenant le stratifié de métal-feuille de résine de revêtement selon l'une quelconque des revendications 1 à 12.

[FIG. 1]

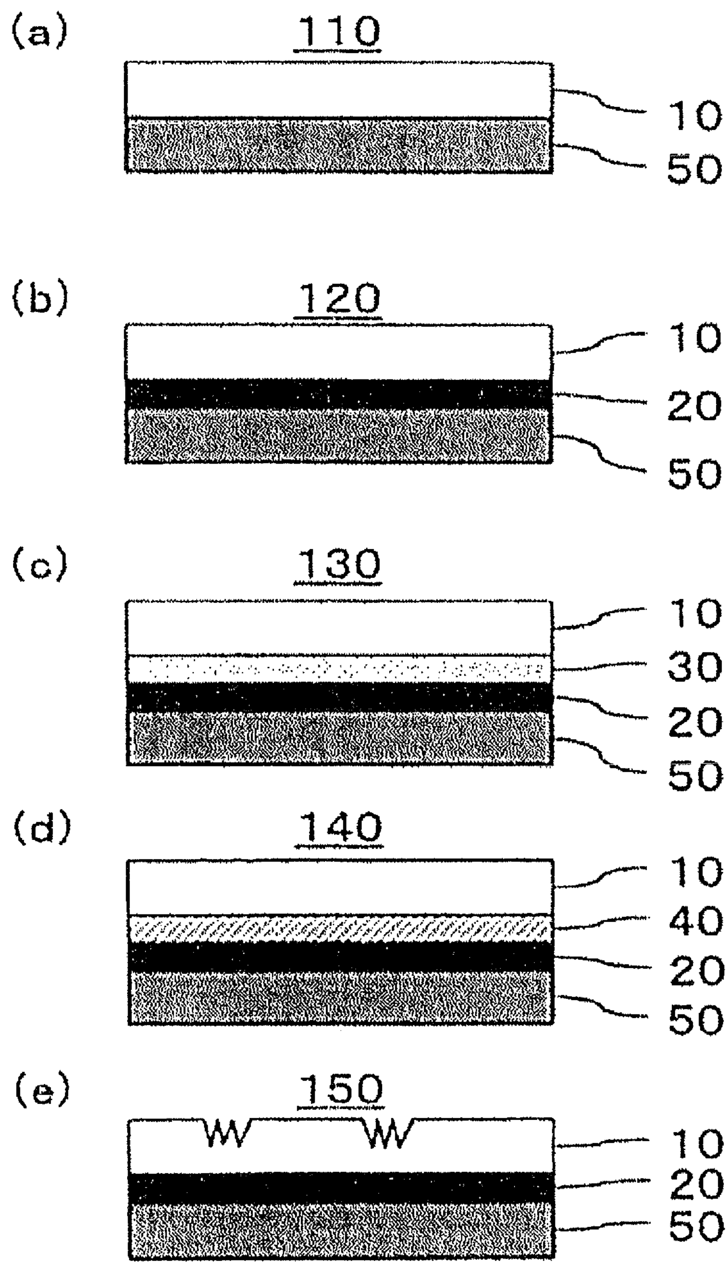
(a)
110
10
50
(b)
120
10
20
50
(c)
130
10
30
20
50
(d)
140
10
40
20
50
(e)
150
10
20
50

[FIG. 2]

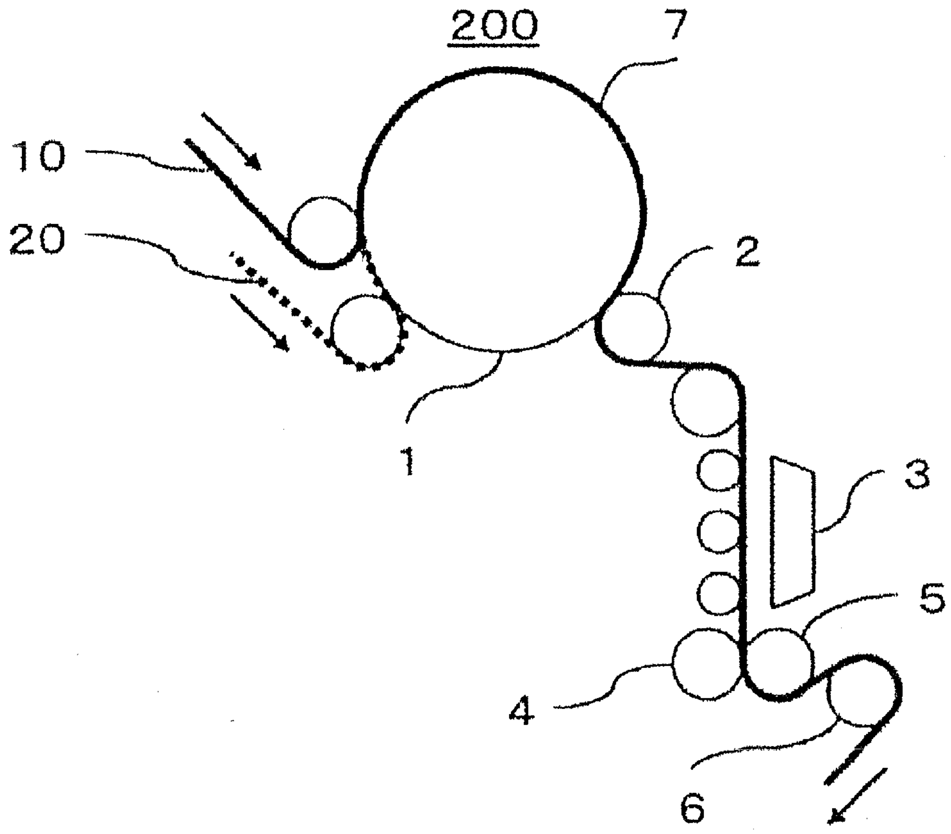

[FIG. 3]

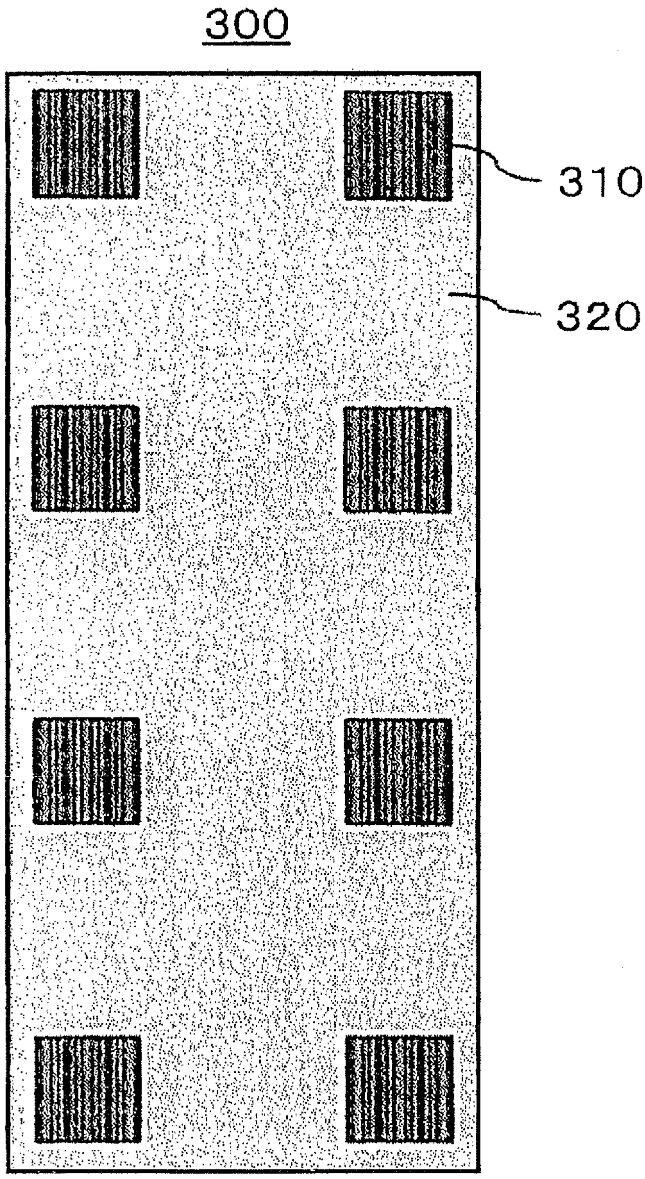

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009144019 A
- US 2009105393 A
- JP 2009079190 A
- JP 2007001022 A
- JP 2007326314 A
- JP 2008188970 A
- WO 2007148604 A
- JP 2010046628 A